# EUROPEAN PATENT APPLICATION

(11) **EP 3 667 439 A1**
(43) Date of publication of application: **17.06.2020**
(21) Application number: 18212177.2
(22) Date of filing: 13.12.2018
(51) Int. Cl.: G05B 13/04, G05B 17/02

(54) **PREDICTIONS FOR A PROCESS IN AN INDUSTRIAL PLANT**

(71) Applicant: ABB Schweiz AG, 5400 Baden (CH)
(72) Inventor: Cortinovis, Andrea, CH-5405 Baden-Dättwil (CH); Mercangoez, Mehmet, CH-5405 Baden-Dättwil (CH)
(74) Representative: Kolster Oy Ab

(57) **Abstract**

To generate real-time or least near real-time predictions for a process in an industrial plant, a set of neural networks are trained to create a set of trained models. The set of trained models is then used to output the predictions, by inputting online measurement results in an original space to two trained models whose outputs are fed, as reduced space inputs and reduced space initial states, to a third trained model. The third trained model processes the reduced space inputs to reduced space predictions. They are fed to a fourth trained model, which outputs the predictions in the original space.

## Description

### FIELD

The present invention relates to providing predictions, especially for a process in an industrial plant with a plurality of variables.

### BACKGROUND ART

The evolvement of networking between computers and computing devices, especially different sensors, capable of communicating without user involvement, has increased the amount of data collected on equipment and processes. By way of example, it is not unheard of to have thousands of sensors and control elements monitoring aspects of a process and equipment within an industrial plant. The vast amount of data collected, combined with artificial intelligence and machine learning, has enabled many advances in several technical fields, including different prediction systems. For example, publications Aswani, Anil, et al. "Provably safe and robust learning-based model predictive control." Automatica, volume 49, issue 5 (2013), pages 1216-1226; Rosolia, Ugo, and Francesco Borrelli. "Learning Model Predictive Control for Iterative Tasks: A Computationally Efficient Approach for Linear System." IFAC-PapersOnLine, volume 50, Issue1 (2017), pages 3142-3147; Hewing, Lukas, Alexander Liniger, and Melanie N. Zeilinger. "Cautious NMPC with Gaussian Process Dynamics for Miniature Race Cars." arXiv preprint arXiv:1711.06586 (2017); and Roller, Torsten, et al. "Learning-based Model Predictive Control for Safe Exploration and Reinforcement Learning." arXiv preprint arXiv:1803.08287 (2018) disclose solutions for nonlinear black box modelling techniques utilizing artificial neural networks and Gaussian processes. Examples of using recurrent neural networks for modelling are disclosed in EP0907117 and in N.Mohajerin and S.Waslander, "Multi-step Prediction of Dynamic Systems with RNNs", arXiv:1806.00526 (2018). In the latter, a simplified process is modelled using recurrent neural networks. A problem with the above disclosed solutions is that they are not in praxis suitable for generating real-time, or near real-time predictions for process in an industrial plants, especially for complex process in an industrial plants with a plurality of variables.

### SUMMARY

An object of the present invention is to provide a mechanism suitable for providing real-time or near real-time predictions for a process in an industrial plant. The object of the invention is achieved by methods, a computer program product, equipment and a system, which are characterized by what is stated in the independent claims. The preferred embodiments of the invention are disclosed in the dependent claims.

According to an aspect of the invention online measurement results in an original space are inputted to a first trained model and a second trained model, which have been trained for a process in an industrial plant. Outputs of the first trained model are fed as reduced space inputs to a third trained model, and outputs of the second trained model are fed as reduced space initial states to the third trained model. The third trained model processes the reduced space inputs to reduced space predictions. They are fed to a fourth trained model, which outputs the predictions in the original space. Thanks to the use of the reduced space, it is possible to provide real-time or near real-time predictions.

Another aspect of the inventions trains neural networks to obtain the above set of trained models for the process in an industrial plant, using past measurement results as training data. The first and fourth trained models are created by training neural networks simultaneously, and after that, depending on implementation, the third trained model is created before the second trained model, or the third trained model and the second trained model are created simultaneously, by training corresponding neural networks.

### BRIEF DESCRIPTION OF THE DRAWINGS

In the following, exemplary embodiments will be described in greater detail with reference to accompanying drawings, in which
Figure 1 shows a simplified architecture of a system;
Figure 2 schematically shows a set of trained models and information flow;
Figures 3 and 4 illustrate different examples of training the models;
Figures 5, 6 and 7 are flow charts illustrating exemplary functionalities; and
Figure 8 is a schematic block diagram.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any process in an industrial plant, including a processing system and/or an industrial manufacturing related process and/or a system for a technical process, which is at least partly automated, providing different measured/sensored values for a plurality of variables on one or more devices (equipment) and/or on one or more processes. A non-limiting list of examples includes power plants, manufacturing plants, chemical processing plants, power transmission systems, mining and mineral processing plants, upstream oil and gas systems, data centers, ships, and transportation fleet systems.

Different embodiments and examples are described below using single units, models, equipment and memory, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment.

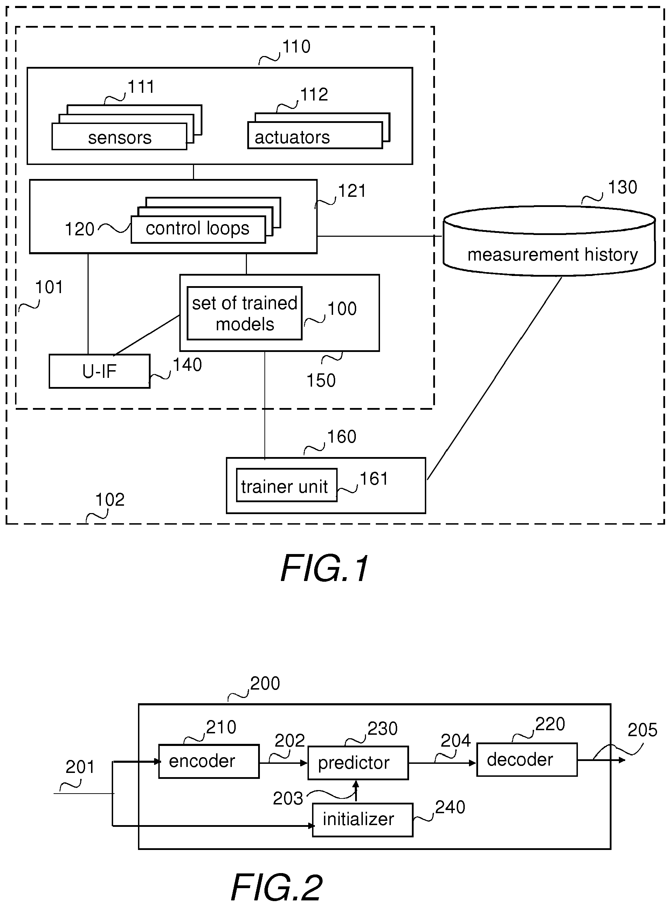

A general exemplary architecture of a system is illustrated in Figure 1. Figure 1 is a simplified system architecture only showing some equipment (apparatuses, devices, nodes) and functional entities, all being logical units whose implementation and/or number may differ from what is shown in Figure 1. The connections shown in Figure 1 are logical connections; the actual physical connections may be different. It is apparent to a person skilled in the art that the systems also comprise other equipment, functional entities and structures.

In the illustrated example of Figure 1, a system 102 comprises an industrial manufacturing process system 101, offline equipment 160 and a data storage 130 (archive for measurement results).

The industrial process system 101 depicts herein any process, or process system, in an industrial plant, examples of which are listed above. Further examples include pulp and paper plants, cement plants, metal manufacturing plants, and refineries. However, the industrial process system is not limited to the examples listed. The industrial process system 101 comprises one or more processes 110 (only one is illustrated), controlled, for example, by control loops 120 forming a control system 121, or one or more control systems. It should be appreciated that term control covers herein also supply chain management, service and maintenance. The control loops 120 measure values for process variables of the processes 110 through sensors 111 and manipulate the process 110 through actuators 112. The control loops 120 may be open control loops or closed control loops, and the control system 121 may be a distributed control system or a centralized control system. In other words, the one or more processes 110 represent different devices, machines, apparatuses, equipment, systems, sub-systems, processes etc., wherefrom data (varied characteristics with a varied frequency) is automatically measured and collected by means of sensors 111, which measure values of process variables.

The measured values of the process variables are stored to the data storage 130 and may be outputted via one or more user interfaces (U-IF), for example, in monitoring equipment 140 on a site and/or on a remote location. The stored values form measurement history, i.e. past measurement results. In other words, the (past) measurement results mainly comprise measured inputs, outputs and disturbances.

The data storage 130, depicting one or more data storages, may be any kind of conventional or future data repository, including distributed and centralized storing of data, managed by any suitable management system. An example of distributed storing includes a cloud-based storage in a cloud environment (which may be a public cloud, a community cloud, a private cloud, or a hybrid cloud, for example). Cloud storage services may be accessed through a co-located cloud computer service, a web service application programming interface (API) or by applications that utilize API, such as cloud desktop storage, a cloud storage gateway or Web-based content management systems. In other words, a data storage 130 may be a computing equipment, equipped with one or more memories, or a sub-system, or an online archiving system, the sub-system or the system comprising computing devices that are configured to appear as one logical online archive (historian) for equipment (devices) that store data thereto and/or retrieve data therefrom. However, the implementation of the data storage 130, the manner how data is stored, retrieved and updated, i.e. details how the data storage is interfaced, and the location where the data is stored are irrelevant to the invention. It is obvious for one skilled in the art that any known or future solution may be used.

The monitoring equipment 140 is for monitoring and/or controlling, including manipulating and adjusting, the one or more processes 110, on the site and/or remotely. In other words, the monitoring equipment 140 depicts a monitoring and/or controlling system (sub-system) that may be implemented by different devices comprising applications that analyse the data, or some pieces of the data, for controlling purposes in real-time, for example. A wide range of applications exists for automation control and monitoring systems, particularly in industrial settings. The analysis may include outputting alarms, disturbances, exceptions, and/or determining different properties relating to the measurement data, such as a minimum value and a maximum value, and/or calculating different key performance indicators. The monitoring equipment 140 comprises one or more human-machine interfaces, such as the one or more user interfaces U-IF, to output the different outputs. A user, typically called an operator, may manipulate, control or adjust the one or more processes, for example by inputting user inputs via the one or more user interfaces.

The different entities 110, 111, 112, 120, 121, 130, 140 of the system, described above, are described only to illustrate possible scenarios, and they, and especially their details, bear no significance to the invention. Therefore, they are not described in more detail here.

The industrial manufacturing process system 101 further comprises online prediction equipment 150 configured to create/generate real-time or near real-time predictions at least from values of the process variables, measured by means of the sensors, for the process in an industrial plant 110, to be inputted to the monitoring equipment 140, for example. Further, depending on an implementation, the predictions are, or are not, stored to the data storage 130. The online prediction equipment 150 comprises one or more sets of trained models 100 for generating/creating the predictions. Basic functionality of the online prediction equipment 150 is described below with Figure 2. Although depicted as a separate entity, the online prediction equipment 150 may be integrated to be part of the controlling system 121.

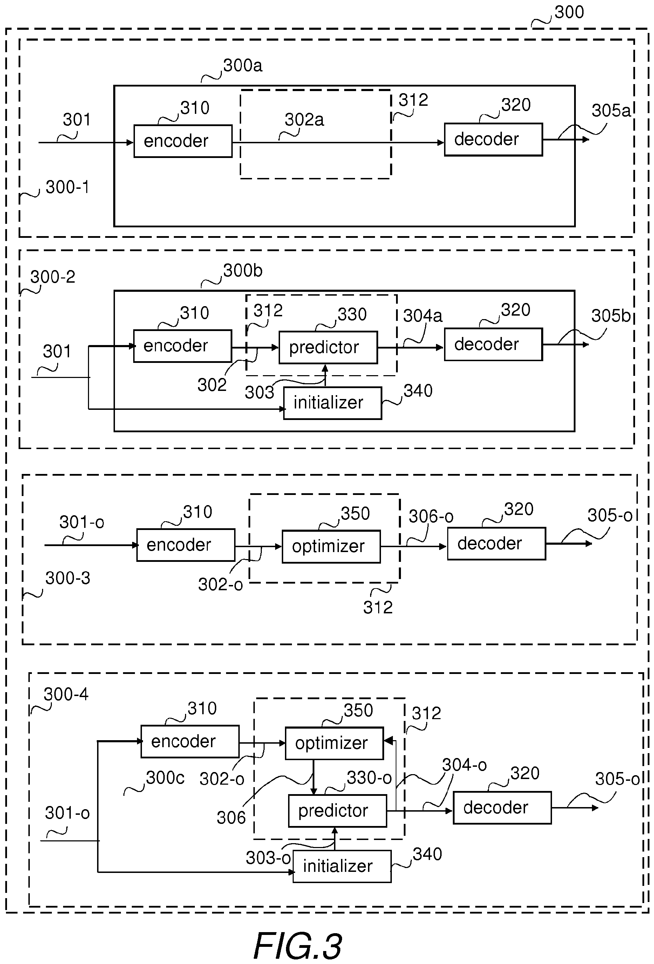

The example system 102 of Figure 1 further comprises an offline equipment 160 with a trainer unit 161 configured to create/update the set of trained models 100 using the measurement history in the data storage 130. Naturally, the equipment 160 may be an online equipment, at least in the sense that measurements results are also inputted to the equipment 160. Different examples of basic functionalities of the trainer unit 161 are described below with Figures 3 to 5. It should be appreciated that the trainer unit 161 may be an online equipment. Further, the trained unit 161 may be implemented as part of the online prediction equipment 150, for example, and even as part of the controlling system 121.

The online prediction equipment 150 and/or the offline equipment 160 may comprise customized computational hardware for machine learning applications and/or for artificial neural networks, for extra efficiency and real-time performance.

Figure 2 illustrates a logical structure of a set of trained models, and a basic principle how the models, or equipment comprising the models, such as the online prediction equipment in Figure 1, produce the predictions for a process in an industrial plant, which the set of trained models are trained to model.

Referring to Figure 2, the set of trained models 200 comprises a model 210 for an encoder, called below "encoder", a model 220 for a decoder, called below "decoder", and between the encoder 210 and the decoder 220, a model 230 for a predictor, called below "predictor", which receives also inputs from a model 240 for an initializer, called below "initializer".

Online measured values 201 of process variables, i.e. online measurement results, are inputted to the encoder 210 and to the initializer 240. In addition to the online measurement results, input 201 to the encoder 210 and to the initializer 240 may also comprise historical trajectories, or planned trajectories of the process variables or expected trajectories (predictions) of measured disturbances. (Disturbances are independent variables that usually cannot be adjusted by the control system.) It bears no significance how the expected trajectories of measured disturbances are obtained, any known or future method may be used. For example, the expected trajectories of measured disturbances may be obtained by assuming that the measured disturbance values will not change over the prediction horizon. In such a case a zero order hold is used. In another example, assuming that there is sufficient amount of data/knowledge available to create a "disturbance model" for the measured disturbances, a representation of the "disturbance model", such as a decay towards zero, can be used instead of the zero order hold.

The encoder 210 processes the inputs 201 in an original space to reduced space inputs 202, which are inputted/fed to the predictor 230. The initializer 240 processes the inputs 201 in the original space to reduced space initial states 203, which are inputted/fed to the predictor 230 to initialize the predictor 230. In other words, the initializer generates state information in the same reduced space as the encoder generates the inputs 202 (variables values), to initialize the predictor 230 to the reduced state. Compared to prior art solutions in which the initial states are assumed to be zero, by feeding the predictor 230 with reduced space initial states 203, performance is increased and unnecessary transients are avoided in the predictions. It should be appreciated that herein term "space" is used as a synonym to order. In other words, "original space" means the same as "original order", and "reduced space" means the same as "reduced order".

The predictor 230 then processes the inputs 202, 203 in the reduced space (hidden space) to reduced space predictions 204 (hidden space predictions), which are then processed by the decoder 220 to predictions 205 in the original space. In other words, predictions are calculated in the reduced space, which makes the calculation process faster and requiring less processing capacity, thereby enabling the real-time, or near real-time predictions. (The near real-time absorbs delays caused by processing from the input 201 of the measured values to the output 205 of predictions in the original space. The near real-time appears to operators as a real-time, since the time difference, if any noticeable exits, is very small.) A non-limiting list of examples of the predictions 205 include N-step ahead predictions of process variables, outputs and disturbances, alarms, reports, optimized step-points to be applied, automatically and/or manually, to the process in an industrial plant modelled, step-points (changes) possibly associated with predicted associated behavior and/or benefits of applying the step-points.

Depending on the model and the process in an industrial plant modelled, the output 205, i.e. the predictions, may be outputted directly via one or more user interfaces and/or inputted to the control system and/or inputted to another set of trained models, for example as part of measured variables, such as measured disturbances.

Predictions outputted via a user interface assist an operator in decision making on whether and how to adjust the process. For example, predictive generation of alarms can alert operators about critical situations before they happen, which in turn increase productivity (efficiency of production) and shortens shut-down times, compared to solutions in which alerts are generated in response to the critical situation happening. If the control system is a model predictive control (MPC) system, or any other corresponding advanced process control system, the predictions can be used to drive the process towards a desired state. For example, different types of optimization and control actions can be carried out by the MPC system to enable autonomous operation of the process (a plant).

For example, when the one or more control loops is/are open control loops, the reduced space predictions 204 can be used to just make plain predictions 205 into the future, outputted to one or more human operators as control information, or the predictions 205 are used as future value inputs for analytics calculations. When outputted to a human operator, he/she may, depending on the outputted value (s) of course, perform a control action, move a valve position, change a motor speed, or shut down the system or start up a parallel process, for example. When predictions 205 are used as inputs, i.e. not used in their plain form but in a further processed form, they may be used, for example, to generate earlier alarms and/or warnings by comparing predictions, or further calculated value, with a threshold, to generate an indication, or estimation, informing when a process will be finished or reach a certain stage, for example. Naturally, both the plain value, and the further processed value may be outputted to the one or more human operators, which will then see both the plain prediction and a further insight, such as an alarm.

For example, when the one or more control loops is/are closed control loops, predictions 205 will be embedded in one or more calculation routines that will cause concrete actions to be performed without human involvement. However, the predictions 205, and/or calculation results may be outputted to one or more human operators. Examples of concrete actions that may be caused automatically include direct actions, such as moving of a pump, changing a speed of a motor, moving a damper, changing current to a heating element, etc., and indirect actions, such as initiation of a shut-down sequence or automatically contacting, for example by sending an email or calling, a maintenance provider to schedule a maintenance service.

It should be appreciated that sets of trained models may be formed by concatenating two or more structures, which correspond to the illustrated logical structure, for example to generate predictions that cover multiple time steps (N-step ahead predictions in an MPC system).

As is evident from the above examples, different collaborating and coexisting optimization solutions can be realized by the one or more sets of trained models.

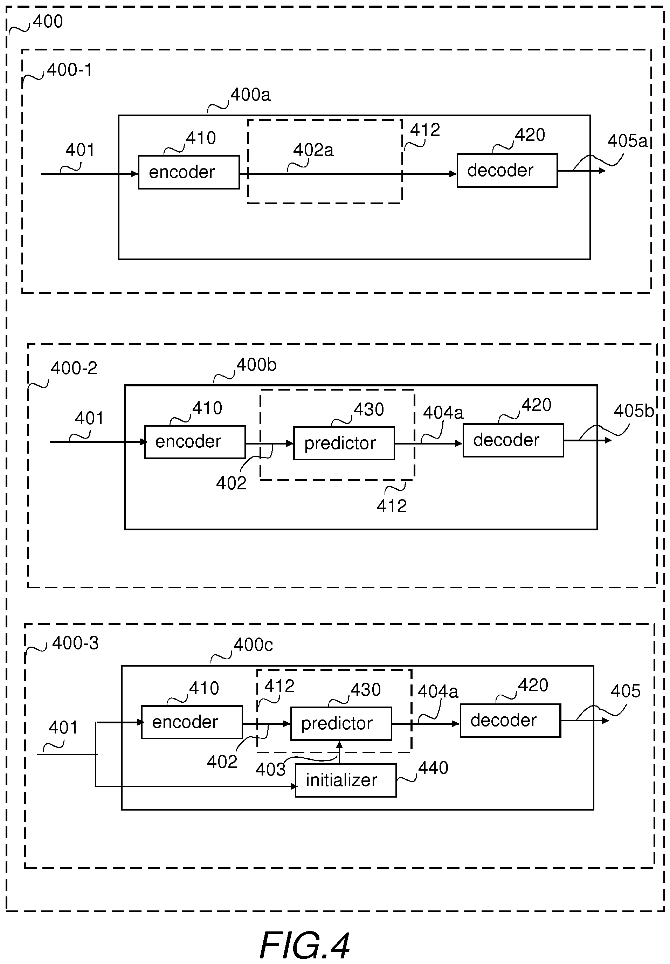

Figures 3 and 4 illustrate different examples of functionalities how to create the set of trained models. More precisely, they illustrate examples of a functionality of the trainer unit. In the illustrated examples it is assumed that there is enough past measurement results that can be used as training data and validation data to create the set of trained models. Since the input/output variables are known, the training is a supervised learning task. Although not explicitly stated, the training process continues until a predetermined accuracy criterion for the predictions is reached. The accuracy criterion depends on the process in an industrial plant for which the models are trained, including its control system and how the retraining of the trainer unit is implemented.

In the example of Figure 3, it is assumed that first the basic set of trained models is created, and then further optimized, whereas in Figure 4 no further optimization, in addition to optimization step in training to find right model parameters, takes place. However, it should be appreciated that the further optimization of the process of Figure 3 may be omitted, i.e. training stopped without any further optimization. Correspondingly the training process of Figure 4 may continue with the further optimization phases of Figure 3. The further optimization may be used, when the process in an industrial plant for which the models are trained allows a degree of freedom in selecting input variables: this freedom can be used to optimize a desired control objective.

Referring to Figure 3, first target is to obtain dimensionality reduction. Dimensionality reduction is a technique used to tackle large-scale multivariable problems with a high degree of correlation among the variables. The correlations allow to represent the behavior of the whole process/system using a reduced set of latent variables, which are constructed from the original variables. The reduced space 312 (reduced space dimension) is also called a latent space to construct dynamic models for latent variables. In other words, the overall purpose of the first phase 300-1 is to learn the time series evolution by using a recurrent structure in the reduced space, and to obtain for the set of trained models 300a the encoder 310 for dimensionality reduction and the decoder 320 for dimensionality restoring. The time series evolution is also called as a dynamic response of output values 305a of variables in an original space to changes in input values 301 of the variables in the original space.

To obtain the trained encoder 310 and the trained decoder 320 for the set of trained models 300a, one or more artificial neural networks for the encoder 310 and one or more artificial neural networks for the decoder 320 are trained (learned). The training (i.e. the phase 300-1) can be carried out with any fitting method. The artificial neural networks used are preferably auto-encoders, for example variational auto-encoders (VAEs), typically realized as feedforward neural networks, but any other type of neural networks may be used as well. An advantage provided especially by the variational auto-encoders is that they are capable of capturing nonlinear relationships over a wide operating range. A further advantage includes that the variational auto-encoders are significantly more robust to noise compared to other types of artificial neural networks.

Inputs 301 to the training process comprises past measurement results at least on measured values of the variables. If past measurement results for measured disturbances are available they can be included to the inputs 301 to the training process. In other words, the past measurement results are used to determine a reduced space dimensional representation 302a of the process in an industrial plant in a reduced space 312 based on the correlations among the variables, and measured disturbances if inputted, in the original space, i.e. in input 301. If the input/output relationships and causality are well established, the space reduction may be carried out only for the output variables and input variables can be treated the same in the original space and the reduced space. In other words, the reduced space dimensional representation 302a may comprise reduced space inputs and reduced space outputs, or inputs in the original space and reduced space outputs. The output 305a is projected results in the original space.

When the encoder 310 and the decoder 320 have been trained and corresponding trained models created, in the example of Figure 3, in the next phase 300-2 the predictor 330 and the initializer 340 are created for the set of trained models 300b by training them in parallel. The predictor 330 is trained in the reduced space 312 between the encoder 310 and the decoder 320. The purpose of this phase is to obtain a system model, i.e. the predictor 330, for the process in an industrial plant in the reduced space 312 using hidden layer state information, i.e. initial states 303, generated by the initializer 340. To obtain the predictor 330, one or more recurrent neural networks are trained in phase 300-2 in the reduced space 312 by iterating at least one step inside the reduced space 312 with the aim to learn N-ahead predictions (sequences) in the reduced space. The one or more recurrent neural networks may comprise, or be composed of, long short-term memory units, or gated recurrent units. Naturally any machine learning structure/unit with a memory may be used.

The one or more recurrent neural networks receive in phase 300-2 as inputs the reduced space outputs 302 from the encoder 310, and reduced space initial states 303 from the initializer, which is trained simultaneously with the predictor. The predictor 330, or more precisely the one or more recurrent neural networks, then outputs reduced space predictions 304a, fed to the decoder 320 to be outputted as predictions 305b in the original space. To obtain the initializer 340 one or more feedforward artificial neural networks are trained by inputting the past measurement results 301 to the one or more feedforward artificial neural networks. The purpose of the initializer 340, and thereby its training, is to initialize the memory aspect of the predictor 330 in the reduced dimension using input from the original dimension.

When the predictor 330 and the initializer 340 have been trained and corresponding trained models created, in the example of Figure 3, the predictor is further optimized, for example to track multiple objectives, which could be related to each other.

Firstly, in phase 300-3, the optimizer 350, i.e. one or more optimization algorithms, are created (set up) for the reduced space dimension by training the optimizer between the encoder 310 and the decoder 320 (created in the first phase 300-1). The inputs 301-o in the original space may be values relating to a selected set of variables. The selected set of variables comprise variables that are selected amongst the plurality of the variables whose values are in the measurement results, based on the optimization purpose. The selected set of variables may also comprise auxiliary variables, for example error states encapsulated by the control system in the measurement results, or other errors. The auxiliary variables may also include objectives and/or constraints. For example, the auxiliary variables may include integral errors on the outputs, the objectives depend on the process/industrial plant, and may be, for example, tracking errors, energy consumption, etc. Further non-limiting examples include distance to a maximum pressure constraint and a distance to a surge in a compression system, just to mention few examples.

The training process of the optimizer 350 includes that the inputs for optimization 301-o in the original space are processed by the encoder 310 to reduced space inputs 302-o for the optimizer 350, or more precisely to the one or more optimization algorithms. The optimizer 350 then calculates reduced space outputs 306-o which are fed to the decoder 320. The decoder then processes the reduced space outputs 306-o to projected results 305-o for the optimization in the original space.

When the optimizer 350 has been set up in the reduced space 312, i.e. phase 300-3 has been ended, the predictor 330, created in phase 300-2, is further optimized in phase 300-4. The further optimization means that the one or more recurrent neural networks forming the predictor are combined with one or more optimization algorithms in the reduced dimension 312. The optimization algorithm may vary the trajectories of the input variables and may determine optimal traj ec-tories for the given objective. The objective may be specified over a time horizon and/or adjusted in different ways to reflect the actual goals to be achieved by the optimization, for example in a model predictive control (MPC) framework. Examples of the actual goals include tracking of a reference trajectory over the time horizon, satisfaction of a specific goal at the end of the horizon, and a cumulative objective over the time horizon, such as a maximization of a productivity for a process plant modelled. An example of the adjustment includes reflecting the further optimization goals and the associated errors, with generated penalties to drive these errors to zero. Such an adjustment can accommodate imperfections in the encoder/decoder. The imperfections may lead to a mismatch in the satisfaction of an objective in the reduced space and in the original space.

The inputs for further optimization 301-o in the original space are processed by the encoder 310 to reduced space inputs 302-o and by the initializer 340 as reduced space initial states 303-o. In this phase 300-4 the optimizer receives inputs from the encoder 310 and from the further optimized predictor 330-o: the reduced space inputs 302-o and reduced space predictions 304-o. From the inputs 302-o, 304-o, the optimizer calculates reduced space inputs 306 which are fed to the further optimized predictor 330-o. The predictor processes the reduced space inputs 306 received from the optimizer and the reduced space initial states 303-o to reduced space outputs 304-o for the further optimization. As said earlier, the reduced space outputs for the further optimization 304-o are inputted to the optimizer 350. Further, the reduced space outputs are fed to the decoder 320 which outputs predictions 305-o for the further optimization in the original space.

Once this further optimization phase 300-4 has ended, the encoder 310 and decoder 320 created in the first phase 300-1, the initializer 340 created in the second phase 300-2, and the further optimized predictor 330-o created in the last phase are stored to be the set of trained models, which will be used as described above with Figure 2.

Referring to Figure 4, the first phase 400-1 of the training 400 corresponds to the first phase of the training in Figure 3, and therefore it is not repeated in detail herein. Shortly, the encoder 410 and the decoder 420 are trained for the set of trained models 400a, using input 401, reduced space dimensional representation 402a in the reduced space 412, and output 405a, corresponding to input 301, reduced space dimensional representation 302a, reduced space 312 and output 305a described above with Figure 3. When corresponding trained models for the encoder 410 and the decoder have been created, in the example of Figure 4, the predictor 430 and the initializer 440 are trained sequentially to create corresponding trained models. The training order is that the predictor 430 is trained first and then the initializer 440 is trained.

In the second phase 400-2 of the training in the process of Figure 4, the one or more recurrent neural networks forming the predictor 430 are trained without using any specific initialization, which is the only difference to the training of the predictor described above in the second phase of the example in Figure 3. In other words, initial states for the predictor can be assumed to be zero. The training is performed for the same purpose as described above with the second phase of Figure 3 for the predictor. Shortly, to obtain the predictor 430, one or more recurrent neural networks are trained in phase 400-2 in the reduced space 412 by iterating at least one step inside the reduced space 412. The one or more recurrent neural networks receive as inputs the reduced space outputs 402 from the encoder 410, outputs reduced space predictions 404a, fed to the decoder 420 to be outputted as predictions 405b in the original space.

When the predictor 430 has been trained, one or more feedforward artificial neural networks, corresponding to those described with Figure 3, are trained in a third phase 400-3 to create the initializer 440 for the set of trained models 400c. The objective of the training is generating better predictions with the predictor 430 by adjusting the output of the initializer 440 from the input 401, i.e. adjusting the generation of reduced space initial states. This phase 400-3 differs from the above second phase 400-2 in that respect that, in addition to the inputs and outputs described above, the same input 401 inputted to the encoder 410 is inputted, for training purposes and to obtain the initializer, to one or more feedforward artificial neural networks, and that the reduced space outputs 403 from the initializer under training are fed to the predictor 430.

When the initializer is trained and corresponding model created, i.e. the third phase 400-3 completed, the initializer 440, the encoder 410 and decoder 420 created in the first phase 400-1, the predictor 430 created in the second phase 300-2 are stored to be the set of trained models, which will be used as described above with Figure 2.

Still further possibilities to obtain the set of trained models is to train the encoder, the decoder, the predictor and the initializer all in parallel in one phase, or to train the encoder, the decoder and the predictor in parallel in one phase and after that to train the initializer.

Regardless of the training method, i.e. the way how the set of trained models is obtained, the result is the same, described above with Figure 2: dimensionality reduction by the encoder and dimensionality restoring the decoder, and the predictor based on one or more recurrent neural networks -in the reduced space with the separate but augmented initializer based on one or more feedforward artificial neural networks that generate the hidden state information.

It should be appreciated that if the industrial manufacturing system comprises two or more processes in an industrial plant, a set of trained models may be created process -specifically, and the sets of trained models may then be combined via input-output linking. Naturally it is possible to create one set of trained models for such a system, or train simultaneously several linked artificial neural networks to obtain the sets of trained models.

As can be seen from the above examples, the resulting model structure, i.e. the set of trained models, is not relying on any linearized modeling tools. Thanks to that, any behavior of interest, including non-linear behavior and time-delays, can be learned/trained, the only condition being that there is sufficient amount of measured/collected data with the necessary features to extract the behavior of interest.

The once created set of models may need retraining, or may be retrained just to make sure that they reflect the modelled process in an industrial plant as well as possible. Depending on implementation (online/offline), the process in an industrial plant modeled, and/or the control system, retraining may be triggered based on various triggering events. The retraining may be triggered automatically, by the control system, for example, and/or manually, i.e. an operator inputting a command causing the retraining to be triggered. Examples that may cause the retraining being triggered include installation of a different equipment to the process or a maintenance act performed, for example correcting a degradation, such as heat exchanger fouling, soot formation, break pad wear, etc. Still further examples include the retraining be triggered automatically in response to a predetermined time limit expiring from the last time the set of models were trained/retrained, or in response to the amount of stored measurement results increasing by a certain amount, or in response certain criteria reflecting prediction accuracy and the continuous monitoring of the prediction accuracy as such being fulfilled, or not being fulfilled.

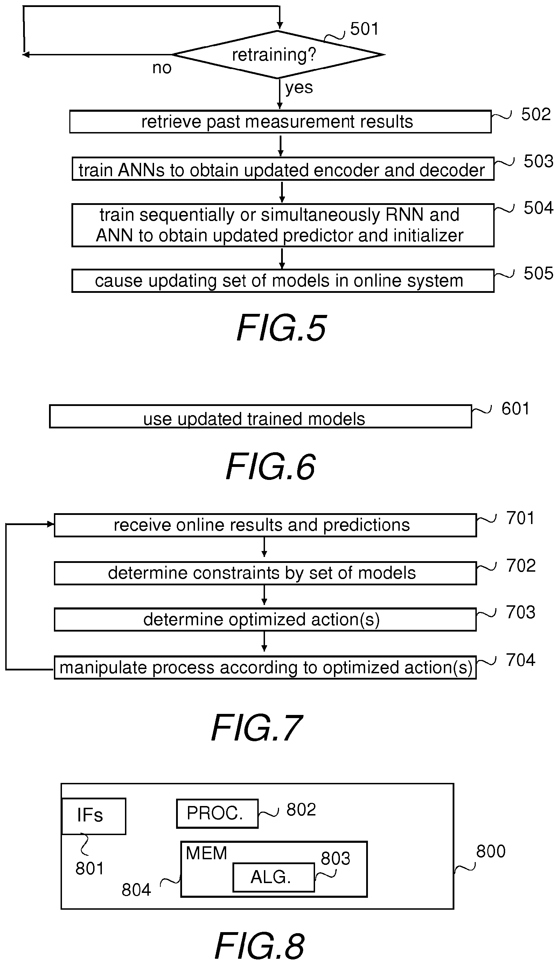

Figure 5 describes an example of a functionality of the trainer unit relating to retraining. In the example it is assumed that no further optimization takes place, and that the training is based on examples in Figure 3 or 4, without limiting the retraining to such solutions.

Referring to Figure 5, it is monitored in step 501, whether or not the retraining is triggered. When it is that the retraining has been triggered (step 501: yes), past measurements results are retrieved (re-retrieved) in step 502 from the data storage to be used as the training data. When the past measurements results are (re-)retrieved, the measurement results stored to the data storage after the previous training/retraining will be inputted to the training procedure. Then the one or more artificial neural networks (ANN), such as the autoencoders, for the encoder and the decoder are trained in step 503 to obtain updated models for the encoder and the decoder. When their retraining process ends, the one or more recurrent neural networks (RNN) for the predictor and the one or more feedforward artificial neural networks (ANN) for the initializer are trained in step 504, either sequentially or simultaneously (in parallel), to obtain updated predictor and updated initializer. When their retraining process ends, updating of the set of models to the online system is caused in step 505.

If the retraining does not cause an actual update (i.e. only minor changes, if any) to a corresponding model, there is no need to cause the updating (step 505).

Naturally, after step 504, before step 505, the further optimization may be performed. Further, steps 503 and 504 may be combined so that the encoder and the decoder are trained simultaneously with the predictor. Naturally it is possible to retrain/update first the decoder and the encoder, and after their retraining ends, i.e. they are updated, to update the predictor and the initializer.

In other implementations, in which the trainer unit is part of the online system, the retraining process may be performed continuously (no monitoring of step 501 being implemented, and the received measurement results may be added to the training material, i.e. also step 502 may be omitted). In the implementations, the set of models may be updated at certain intervals (i.e. a corresponding check between steps 504 and 505), and/or in response to detecting that at least in one of the models in the set of models the update caused a change that exceeds a predetermined "update to the online system" limit. In the latter case, the whole set of trained models may be updated, or only the one exceeding the limit. Further, it should be appreciated that the neural networks mentioned above are not the only possibilities, but any of the models may be created using any other machine learning model, such as models based on Gaussian processes or on random forests (random decision forests). Further, any neural network mentioned above may be replaced by another neural network mentioned above to create a corresponding model. For example, instead of ANNs, RNNs may be used, and vice versa.

Referring to Figure 6, the online prediction equipment comprising the set of models uses (step 601) the updated set of models, after the one or more models are updated.

As can be seen from the above, a mechanism that can be used for monitoring and controlling of complex industrial process operations in different fields of processes in one or more industrial plants is disclosed. The set of trained models are in principal automatically customized to the process in an industrial plant they model, thanks to the training data being the one that is collected from the process in an industrial plant.

The set of trained models disclosed overcomes issues that exits in black box modelling. The black box modelling suits for isolated experiments, is usable only with linear systems (output changes by an amount linearly proportional to the change in input), cannot be used with data collected by closed loops, without rather heavy data manipulation, and it cannot take into account excitations happening continuously (routinely). Examples of when such excitations happen include start-ups and shut-downs, grade or production rate changes, and interactions in existing control loops during their reaction to unmeasured disturbances.

Further, issues that exist in so called grey-box modelling, in which mathematical models are created, using scientific knowledge about the process, and then tuned by parametrization, because of complexity of underlying physical laws, are also overcome: there is no need to create mathematical models and tune them when the set of trained models disclosed is used. Further advantages of the disclosed solutions over the grey-box modelling include that changes in the process, such as new equipment can be taken into account much easier, by the retraining, and that the disclosed mechanism can be used with advanced controlling systems that are not easy to parametrize.

As described above with Figure 1, the set of models may be used, as an internal model, instead of a state-space model or a transfer function model, in a controller implementing any model-based controller, such as an MPC (model predictive control) controller. Different state-spaced models and transfer function models are based on grey-box modelling or black box modelling, having problems disclosed above. The set of models, based on machine learning and being trained on historical values, thereby having one of the model structures described above, amounts to a concatenation of nonlinear mathematical algorithms in the state-space model or the transfer function model, and therefore can be incorporated to the model predictive control to provide a model and constraints to the optimization problem. More precisely, the model predictive control uses current plant/process measurements, current dynamic state of the process, the internal model and an optimization algorithm to determine (calculate) one or more control actions to be performed for N-step ahead predictions, and repeats this functionality to compensate mismatch between the predictions and the measured result(s) in the process. The optimization algorithm is an optimization problem for finding an optimal process/plant manipulation/action(s), which optimizes a specific objective, such as reference tracking, disturbance rejection, etc.

Figure 7 describes an example functionality of a controller implementing the model predictive controller by using one or more sets of trained models, created and possibly updated as described above with Figures 3 to 5. The controller may be one of the control loops illustrated in Figure 1, for example. The one or more sets of models as one or more internal models in the controller are preferably the same as those used in the online predicting equipment illustrated in Figure 1.

Referring to Figure 7, the controller receives in step 701 two types of inputs: online measured values of plurality of process variables, i.e. online measurement results, and predictions in an original space. The predictions are based on the online measurement results and outputted by the online predicting equipment comprising one or more sets of trained models. Constraints are determined in step 702 from the inputs by using the one or more sets of trained models, as an internal model in the model predictive control. Then one or more optimized actions to manipulate the process are determined, in step 703, by the optimization problem for the process in the industrial plant, based on the constraints determined in previous steps. Naturally the target of the optimization affects to the optimized actions. Once the one or more optimized actions are determined, manipulation of the process according to the one or more optimized action is caused in step 704. In other words, the process is controlled. Then the depicted controlling functionality returns to step 701 to receive the inputs, now reflecting the one or more optimized actions. The new inputs cause re-computing optimized actions, re-manipulating, receiving new inputs, etc. In other words, the controller is interacting, without user involvement, with the process/plant. In a long run, an optimized state of the process may be achieved.

The techniques described herein may be implemented by various means so that equipment/apparatus/device implementing one or more functions described with an embodiment/implementation/example, or a combination of embodiments/implementations/examples, comprises not only prior art means, but also specific means for implementing the one or more functions described with an embodiment/implementation/example and it may comprise separate means for each separate function, or specific means may be configured to perform two or more functions. The specific means may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For firmware or software, implementation can be through modules (e.g., procedures, functions, and so on) that perform the functions described herein.

The techniques and methods described herein may be implemented by various means so that equipment/a device/an apparatus configured to use the set of trained models or create/update them on at least partly on what is disclosed above with any of Figures 1 to 7, including implementing one or more functions/operations of a corresponding equipment/unit described above with an embodiment/example, for example by means of any of Figures 1 to 7, comprises not only prior art means, but also means for implementing the one or more functions/operations of a corresponding functionality described with an embodiment/example, for example by means of any of Figures 1 to 7, and the equipment may comprise separate means for each separate function/operation, or means may be configured to perform two or more functions/operations. For example, one or more of the means and/or the trainer unit described above may be implemented in hardware (one or more devices), firmware (one or more devices), software (one or more modules), or combinations thereof. For a hardware implementation, the device(s) or apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 1 to 7, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components described herein may be rearranged and/or complemented by additional components in order to facilitate the achievements of the various aspects, etc., described with regard thereto, and they are not limited to the precise configurations set forth in the given figures, as will be appreciated by one skilled in the art.

Figure 8 is a simplified block diagram illustrating some units for equipment 800 configured to provide the online predicting equipment, or a corresponding computing device, with the one or more sets of trained models, and/or the offline equipment comprising at least one or more trainer units, or corresponding units and sub-units, described above with Figures 1 to 7, or corresponding functionality or some of the corresponding functionality if functionalities are distributed in the future. In the illustrated example, the equipment comprises one or more interfaces (IF) 801 for receiving and/or transmitting information from or to other devices, and possibly from or to a user, one or more processors 802 configured to implement the functionality of the online predicting equipment, or a corresponding computing device, with the one or more sets of trained models, and/or the offline equipment comprising at least one or more trainer units, described above with Figures 1 to 7, or at least part of corresponding functionality as a sub-unit functionality if a distributed scenario is implemented, with corresponding algorithms 803, and one or more memories 804 usable for storing a computer program code required for the online predicting equipment, or a corresponding computing device, with the one or more sets of trained models, and/or the offline equipment comprising at least one or more trainer units, or for one or more corresponding units or sub-units, i.e. the algorithms for implementing the functionality. The memory 804 is also usable for storing the set of trained models, and other information.

In other words, equipment (device, apparatus) configured to provide the online predicting equipment, or a corresponding computing device, with the one or more sets of trained models, and/or the offline equipment comprising at least one or more trainer units, or a device/apparatus configured to provide one or more of the corresponding functionalities described above with Figures 1 to 7, is a computing equipment that may be any apparatus or device or equipment or node configured to perform one or more of the corresponding functionalities described above with an embodiment/example/implementation, and it may be configured to perform functionalities from different embodiments/examples/implementations. Required units and sub-units, for example the trainer unit, may be separate units, even located in another physical apparatus, the distributed physical apparatuses forming one logical equipment providing the functionality, or integrated to another unit in the same equipment.

The equipment configured to provide the online predicting equipment, or a corresponding computing device with the one or more sets of trained models, and/or the offline equipment comprising at least one or more trainer units, or a device configured to provide one or more corresponding functionalities may generally include one or more processors, controllers, control units, micro-controllers, or the like connected to one or more memories and to various interfaces of the equipment. Generally a processor is a central processing unit, but the processor may be an additional operation processor. Each or some or one of the units/sub-units and/or algorithms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units/sub-units and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), graphics processing units (GPUs), logic gates and/or other hardware components that have been programmed and/or will be programmed by downloading computer program code (one or more algorithms) in such a way to carry out one or more functions of one or more embodiments/implementations/examples. An embodiment provides a computer program embodied on any client-readable distribution/data storage medium or memory unit(s) or article(s) of manufacture, comprising program instructions executable by one or more processors/computers, which instructions, when loaded into a device, constitute the tracking unit and/or the archiving unit, or any sub-unit. Programs, also called program products, including software routines, program snippets constituting "program libraries", applets and macros, can be stored in any medium and may be downloaded into an apparatus. In other words, each or some or one of the units/sub-units and/or the algorithms described above may be an element that comprises one or more arithmetic logic units, a number of special registers and control circuits.

Further, the online predicting equipment, or a corresponding computing device with the one or more sets of trained models, and/or the offline equipment comprising at least one or more trainer units, or a device configured to provide one or more of the corresponding functionalities described above with Figures 1 to 7 may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database management system. In other words, the memory, or part of it, may be any computer-usable non-transitory medium within the processor/equipment or external to the processor/equipment, in which case it can be communicatively coupled to the processor/equipment via various means as is known in the art. Examples of an external memory include a removable memory detachably connected to the apparatus, a distributed database and a cloud server. The memory may also store computer program code such as software applications (for example, for one or more of the units/sub-units/algorithms) or operating systems, information, data, content, or the like for the processor to perform steps associated with operation of the equipment in accordance with examples/embodiments.

It will be obvious to a person skilled in the art that, as technology advances, the inventive concept can be implemented in various ways. The invention and its embodiments are not limited to the examples described above, but may vary within the scope of the claims.

## Claims

1. A computer implemented method comprising:
receiving online measurement results comprising, for a plurality of variables, values that are measured from a process in an industrial plant;
inputting the measurement results in an original space to a first trained model of the process in an industrial plant and to a second trained model of the industrial process;
processing, by the first trained model, the measurement results, to reduced space inputs;
processing, by the second trained model, the measurement results to reduced space initial states;
feeding the reduced space inputs and the reduced space initial states to a third trained model of the process in an industrial plant;
processing, by the third trained model, the reduced space inputs and the reduced space initial states to reduced space predictions;
feeding the reduced space predictions to a fourth trained model of the process in an industrial plant;
processing, by the fourth trained model, the reduced space predictions to predictions in the original space; and
outputting the predictions.

2. A computer implemented method as claimed in claim 1, further comprising:
receiving on update at least to one of the trained models; and
updating the at least one of the trained models correspondingly.

3. A computer implemented method as claimed in claim 1 or 2, wherein the first trained model and the fourth trained model are based on one or more variational auto-encoders, the third trained model is based on one or more recurrent neural networks and the second trained model is based on one or more feedforward artificial neural network.

4. A computer implemented method for creating a set of trained models for a process in an industrial plant, the set of trained models comprising a first trained model, a second trained model, a third trained model and a fourth trained model, the method comprising:
using past measurement results from the process in an industrial plant as training data;
creating the first trained model and the fourth trained model by training simultaneously an encoding artificial neural network for dimensionality reduction to learn the first trained model and a decoding artificial neural network for dimensionality restoring to learn the fourth trained model, wherein the dimensionality reduction is from an original space to a reduced space and the dimensionality restoring is from the reduced space to the original space; and
creating the second trained model and the third trained model by training neural networks either sequentially, first a recurrent neural network between the first and fourth trained models to create the third trained model for reduced space predictions and then a feedforward artificial neural network to create the second trained model for reduced space initial states, or training simultaneously the recurrent neural network between the first and fourth trained models and the feedforward artificial neural network.

5. A computer implemented method as claimed in claim 4, wherein the encoding artificial neural network and the decoding artificial neural network are variational auto-encoders; and the first trained model and the fourth trained model are learned in a supervised learning process.

6. A computer implemented method as claimed in claim 4 or 5, further comprising, when creating the second trained model and the third trained model by training neural networks sequentially:
using, when training the recurrent neural network, reduced space outputs produced by the first trained model from the past measurements results and zeroes as initial states as inputs to the recurrent neural network;
training the artificial neural network with objective to generate better projected results by using past measurement results from the process in an industrial plant and by adjusting outputted reduced order initial states.

7. A computer implemented method as claimed in claim 4 or 5, further comprising when creating the second trained model and the third trained model by training neural networks simultaneously:
creating the second trained model and the third trained model by training in parallel an artificial neural network for initial states to create the second trained model and a recurrent neural network to create the third trained model; and
using, for training the recurrent neural network, reduced space outputs produced by the first trained model from the past measurement results, and using, for training the artificial neural network for initial states, the past measurement results.

8. A computer implemented method as claimed in claim 4, 5, 6 or 7, wherein the recurrent neural network comprises long short-term memory units or gated recurrent units.

9. A computer implemented method as claimed in claim 4, 5, 6, 7 or 8, further comprising:
optimizing further the third trained model by inputting reduced space outputs from the recurrent neural network to an optimization algorithm and inputting results of the optimization algorithm as reduced space inputs to the recurrent neural network.

10. A computer implemented method as claimed in any of claims 4 to 9, further comprising
repeating the training using updated past measurement results from the process in an industrial plant as training data to retrain at least one of the trained models; and
causing updating the set of trained models after retraining.

11. A computer implemented method for controlling a process in an industrial plant, the method comprising:
receiving, in a controller implementing a model predictive control, online measurement results comprising, for a plurality of variables, values that are measured from the process in the industrial plant, and predictions in an original space, which predictions are based on the online measurement results and outputted by a set of trained models, which are created by a method as claimed in any of claims 4 to 10 for the process in the industrial plant;
using, in the controller implementing the model predictive control, as an internal model in the model predictive control, the set of trained models, to determine, from the received online measurement results and predictions, constraints for an optimization problem of the model predictive control;
determining, by the optimization problem, based on the constraints determined using the trained models, one or more optimized actions to manipulate the process; and
causing, by the controller, manipulation of the process according to the one or more optimized action.

12. A computer program product comprising program instructions, which, when run on a computing equipment, causes the computing equipment to perform a method as claimed in any preceding claim upon receiving measurement results measured from a process in an industrial plant.

13. Equipment comprising means for implementing a method as claimed in any of claims 1 to 11.

14. A system comprising at least:
one or more sensors providing measurement results comprising values for a plurality of variables on at least one process in an industrial plant;
memory for storing measurement results;
equipment comprising means for implementing a method as claimed in claim 1, 2, 3 or 4 for creating predictions for the at least one process in an industrial plant using one or more sets of trained models; and
equipment comprising means for implementing a method as claimed in claim 1, 2, 3 or 4 for creating predictions for the at least one process in an industrial plant using one or more sets of trained models.

15. A system as claimed in claim 14, wherein the at least one process in an industrial plant is in one of a power plant, manufacturing plant, chemical processing plant, power transmission system, mining and mineral processing plant, pulp and paper, upstream oil and gas system, data center, ship and transportation fleet system.
